# EUROPEAN PATENT APPLICATION

(11) **EP 1 607 964 A2**
(43) Date of publication of application: **21.12.2005**
(21) Application number: 05253682.8
(22) Date of filing: 14.06.2005
(51) Int. Cl.: G11B 19/12, G11B 20/00

(54) **Recording medium, a method of obtaining playback-permission information, a playback apparatus, a computer program and a computer readable storage medium**

(30) Priority: 15.06.2004 JP 2004176960
(71) Applicant: SONY CORPORATION, Tokyo (JP)
(72) Inventor: Sako, Yoichiro, Sony Corporation, Tokyo (JP); Ota, Osamu, Sony Corporation, Tokyo (JP); Koyata, Tomohiro, Sony Corporation, Tokyo (JP); Ohgami, Takahisa,Sony Corporation, Tokyo (JP); Kinoshita, Takashi, Sony Corporation, Tokyo (JP); Mizuno, Hiroshi, Sony Corporation, Tokyo (JP)
(74) Representative: Nicholls, Michael John

(57) **Abstract**

A content recording medium (1) includes a content recording area (1c) where content data is recorded in such a manner that playback of the content data is restricted; and a playback-permission-information recording area (1e) where playback-permission information that allows canceling the playback restriction of the content data to permit playback is to be recorded, the playback-permission-information recording area being provided separately from the content recording area.

## Description

The present invention contains subject matter related to Japanese Patent Application JP 2004-176960 filed in the Japanese Patent Office on June 15, 2004, the entire contents of which are incorporated herein by reference.

The present invention relates to a content recording medium, such as an optical disk or a semiconductor memory, having recorded thereon content data including a plurality of pieces of content, such as video and music. The present invention also relates to a method of obtaining playback-permission information, a content playback method, and a content playback apparatus relating to the content recording medium.

Content, such as video or music, can be provided to a user by selling or lending a recording medium having content data recorded thereon to the user or by distributing content data to the user via a network.

According to Japanese Unexamined Patent Application Publication No. 2003-91927, on a disk medium for lending, identification information indicating that the disk medium is for lending is recorded so that the playback of content is restricted based on the identification information.

According to Japanese Unexamined Patent Application Publication No. 2002-359616, encrypted content data including license identification information and decryption key information is sent from a server of a licenser to a client of a user. The client requests a license to the server based on the license identification information, and the server sends the license to the client. The client decrypts the encrypted content data based on the license, and plays back the content.

With the increase in the capacities of recording media and the increase in data compression rate of compression techniques, it is possible to record a large number of pieces of content, such as video and music, on a single recording medium, such as a disk medium. For example, it is possible to record approximately 70 CD (Compact Disc) albums on a single 50-GB (gigabyte) Blu-ray Disc® (BD). Furthermore, using a 1/10 compression codec for CD-DA (CD Digital Audio), it is possible to record approximately 700 CD albums.

When a large number of pieces of video or music corresponding to several DVDs (Digital Versatile Discs), several tens of CDs, or several hundreds of CDs is recorded on a single disk medium and is provided to a user, the content provider tends to raise the sales price of the disk in accordance with the large number of pieces of content provided. This discourages the user from purchasing the disk.

It is desired that even when a large number of pieces of content is recorded on a single recording medium, a content provider can provide the recording medium inexpensively and the user can purchase the recording medium inexpensively.

According to an embodiment of the present invention, a content recording medium is provided. The content recording medium includes a content recording area where content data is recorded in such a manner that playback of the content data is restricted; and a playback-permission-information recording area where playback-permission information that allows canceling the playback restriction of the content data to permit playback is to be recorded, the playback-permission-information recording area being provided separately from the content recording area.

According to another embodiment of the present invention, a method of obtaining playback-permission information that allows canceling playback restriction of content data on the content recording medium to permit playback at a content-playback side is provided. The method includes the steps of requesting, at the content-playback side, a server of a playback-permission-information issuer to issue the playback-permission information; issuing the playback-permission information to the content-playback side by the server in response to the request; and receiving the playback-permission information and recording the playback-permission information in the playback-permission-information recording area at the content-playback side.

According to another embodiment of the present invention, a content playback apparatus for playing back content data from the content recording medium is provided. The content playback apparatus includes a determining unit determining whether playback-permission information for content data that is to be played back according to an instruction is recorded in the playback-permission-information recording area; a playback unit playing back the content data when it is determined by the determining unit that playback-permission information for the content data is recorded in the playback-permission-information recording area; and a presenting unit presenting a message that the playback of the content data is not allowed when it is determined by the determining unit that playback-permission information for the content data is not recorded in the playback-permission-information recording area.

With the content recording medium described above, regarding a piece of video or audio content whose playback is restricted among a plurality of pieces of content recorded on the content recording medium, when or after obtaining the content recording medium, a user requests an entity that issues permission, such as a content provider, to issue permission for playback of the piece of content. In response to the request, the entity issues playback-permission information (playback-restriction canceling information) to the user. Thus, the user can obtain playback-permission information for video or audio content of interest.

The playback-permission information is recorded in the playback-permission-information recording area of the content recording medium, for example, by an operation by the user or by an operation of the content playback apparatus. When playback of the content is instructed by the user, a controller of the content playback apparatus plays back the content only when playback-permission information for the specific content is recorded in the playback-permission-information recording area of the content recording medium.

Accordingly, the content provider can collect prices for individual pieces of content by charging the user when the user requests playback permission. Thus, even when a large number of pieces of content is recorded on a single recording medium, it is possible to provide the content recording medium inexpensively, or even for free depending on cases, to the user.

The user can obtain the content recording medium having recorded thereon a large number of pieces of content inexpensively or for free, and purchase only desired pieces of content. Thus, instead of individually purchasing separate CDs or DVD for albums, the user can enjoy a large number of albums on a single medium. This alleviates the work of purchasing or managing the albums.

Furthermore, the playback-permission information obtained is recorded on the content recording medium, and information indicating whether playback of the content is restricted or the playback restriction is canceled to allow playback exists on the content recording medium. Thus, the user can play back content with legitimately obtained playback-permission information at any location and by any content playback apparatus that has a function of determining whether playback-permission information is recorded on the content recording medium and playing back content only when playback-permission information is recorded. Also, a third party to whom the content recording medium has been transferred legitimately can play back the content.

Furthermore, the content provider can create and distribute a large number of recording media having recorded the same content thereon instead of creating separate recording media for different albums. Accordingly, manufacturing cost and distribution cost of recording media can be reduced considerably.

The invention will now be described with reference to the accompanying non-limiting drawings.
Fig. 1 is an illustration of a content recording medium according to an embodiment of the present invention;
Fig. 2 is an illustration of a content recording medium according to an embodiment of the present invention;
Fig. 3 is an illustration of a content recording medium according to an embodiment of the present invention;
Fig. 4 is a diagram showing schemes of obtaining playback-permission information;
Fig. 5 is a diagram showing a content playback apparatus according to an embodiment of the present invention; and
Fig. 6 is a flowchart of a content-playback controlling process that is executed by a controller of the content playback apparatus.

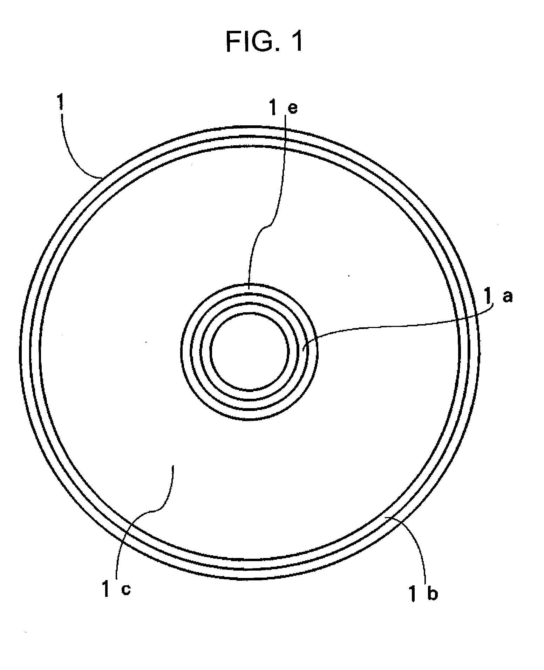

### 1. Embodiments of Content Recording Medium (Figs. 1 to 3)

### 1-1. Examples of content recording medium

Fig. 1 shows an example where an optical disk is used as a content recording medium. The physical area of an optical disk 1 is divided into a lead-in area 1a, a playback-permission-information recording area 1e, a content recording area 1c, and a lead-out area 1b, in that order from the inner side toward the outer side.

In the content recording area 1c, a plurality of pieces of content, such as video and music, is recorded in advance by a content provider in such a manner that playback of all or some of the pieces of content is restricted as will be described later. Furthermore, in the lead-in area 1a, medium identification information identifying the content recording medium, the number of pieces of content recorded in the content recording area 1c, content identification information identifying the respective pieces of content, content index information representing titles or the like of the respective pieces of content, addresses where the respective pieces of content are recorded on the optical disk 1, and addresses where pieces of playback-permission information for the respective pieces of content are to be recorded on the optical disk 1, are recorded. In the lead-out area 1b, for example, information indicating the end of content data is recorded.

In the playback-permission-information recording area 1e, as will be describe later, when or after a user obtains the optical disk 1, playback-permission information that allows canceling the playback restriction to permit playback of content is recorded.

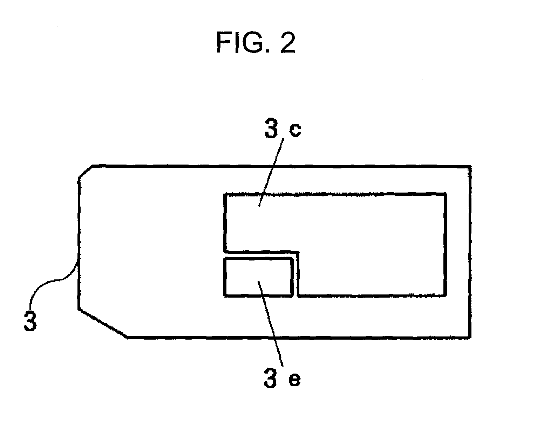

Fig. 2 shows an example where a card-shaped memory, such as a Memory Stick® or an IC card, is used as a content recording medium. The address area of the card-shaped memory 3 is divided into a content recording area 3c and a playback-permission-information recording area 3e. In the content recording area 3c, a plurality of pieces of content, such as music, is recorded in advance by a content provider in such a manner that playback of all or some of the pieces of content is restricted. In the playback-permission-information recording area 3e, the playback-permission information is recorded when or after a user obtains the card-shaped memory 3.

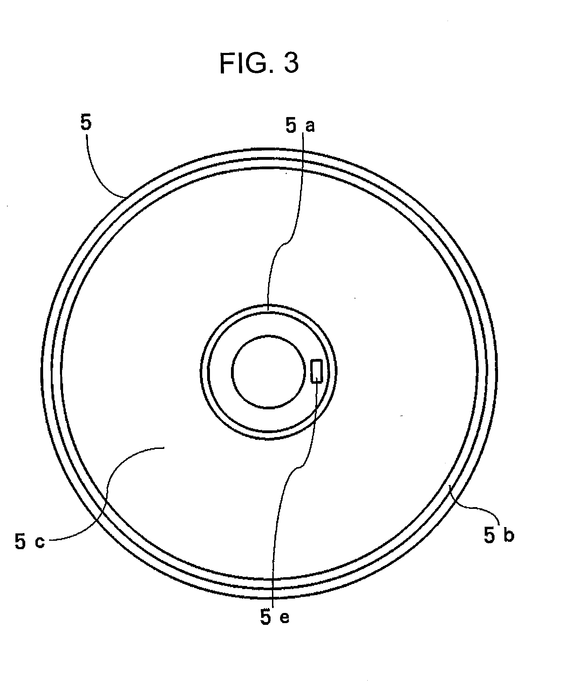

Fig. 3 shows an example where a semiconductor chip 5e embedded in an innermost area of an optical disk 5 is used as a content recording medium. The physical area of the optical disk 5 is divided into a lead-in area 5a, a content recording area 5c, and a lead-out area 5b. In the content recording area 5c, a large number of pieces of content data is recorded in advance by a content provider in such a manner that playback of all or some of the pieces of content is restricted, and the semiconductor chip 5e is used as a playback-permission-information recording area, in which the playback-permission information is recorded when or after a user obtains the optical disk 5.

### 1-2. Target of playback restriction

Content that is subject to playback restriction may be all the large number of pieces of content recorded in the content recording area 1c, 3c, or 5c, or some of the pieces of content.

For example, in the example shown in Fig. 1 or the example shown in Fig. 3, when 70 CD albums are recorded on a single 50-GB BD, it is possible to record some non-new albums without playback restriction while recording the other albums with playback restriction. In this case, playback-permission information is provided on a basis of each album.

Similarly, when a large number of CD albums is recorded on a single BD, it is possible to record some pieces of music without playback restriction while recording the other pieces of music with playback restriction. In this case, playback-permission information is provided on a basis of each piece of music.

Also, it is possible to record content for commercial or content for demo (i.e., for trial listening or viewing) without playback restriction while recording main content with playback restriction. Also, it is possible to record a part (e.g., a beginning part) of a single piece of content without playback restriction while recording the other parts with playback restriction.

The playback of content can be restricted, for example, by encrypting content data that is recorded. In this case, a user can obtain a decryption key as playback-permission information, decrypts the encrypted content data using the decryption key, and play back the content.

As will be described later, however, the playback of content can be restricted by methods other than encrypting content data.

Even when content data that is recorded is encrypted, it is possible not to encrypt a part of data of a single piece of content. For example, when the content is a piece of music, it is possible not to encrypt data of a beginning part while encrypting the subsequent parts. In this case, the user can listen to the beginning part of the piece of music without obtaining a decryption key as playback-permission information, and determine based on the part whether to purchase the piece of music, i.e., whether to obtain playback-permission information for the piece of music.

Content data may be encrypted on a basis of each piece of content. Alternatively, content data may be encrypted on a basis of each group of content.

When content data is encrypted, in addition to the decryption key, the playback-permission information includes medium identification information identifying the content recording medium and content identification information identifying the content are included in the playback-permission information.

### 2. Embodiment of Method of Obtaining Playback-Permission Information

A user who has obtained the content recording medium of one of the examples shown in Figs. 1 to 3, at a price or for free, obtains playback-permission information of desired content by the following method.

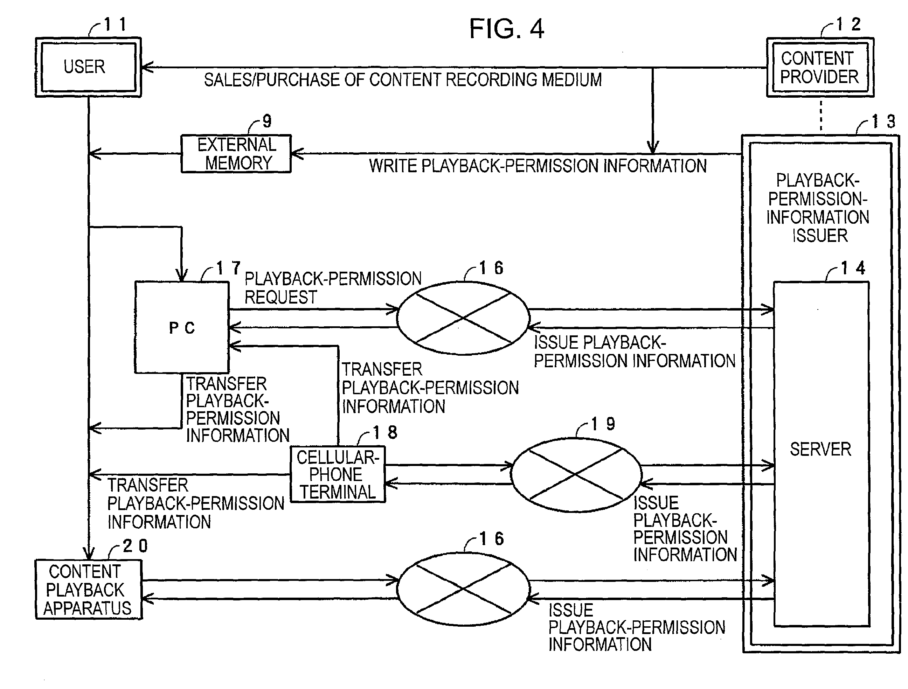

Fig. 4 shows a state where a content provider 12 has sold the content recording medium and a user 11 has purchased the content recording medium. At this time, for example, a list of titles and overviews (leading actor, director, and the like when the content is video content, such as a movie or a drama) of respective pieces of content or respective groups of content recorded on the content recording medium is provided from the content provider 12 to the user 11. With reference to the list, the user 11 can select content to purchase by obtaining playback-permission information.

### 2-1. Obtaining playback-permission information when obtaining content recording medium

A first method of obtaining playback-permission information is to obtain playback-permission information from the content provider 12 on the spot when obtaining the content recording medium.

That is, in the first method, when the user 11 obtains the content recording medium from the content provider 12, the user 11 pays a price to the content provider 12 is charged by the content provider 12 on the spot, and then obtains playback-permission information for desired content.

In this case, the content provider 12, by a writing device, writes playback-permission information including medium identification information identifying the content recording medium obtained by the user 11 and content identification information identifying content that the user 11 purchases, e.g., the decryption key, in the playback-permission-information recording area of the content recording medium obtained by the user 11 or an external memory 9 separate from the content recording medium.

When the playback-permission information is written on the external memory 9, the user 11 (a) attaches the external memory 9 to the content playback apparatus 20 and records the playback-permission information in the playback-permission-information recording area of the content recording medium by the content playback apparatus 20, or (b) attaches the external memory 9 to a personal computer (PC) 17, transfers the playback-permission information to the content playback apparatus 20, and records the playback-permission information in the playback-permission-information recording area of the content recording medium by the content playback apparatus 20.

### 2-2. Obtaining playback-permission information after obtaining content recording medium

In a second method of obtaining playback-permission information, after obtaining a content recording medium, playback permission is requested to a playback-permission-information issuer 13 that is the content provider 12 itself or is associated with the content provider 12, thereby obtaining playback-permission information from the playback-permission-information issuer 13.

In the second method, for example, (1) playback-permission information is written in a playback-permission-information recording area of the content recording medium or on the external memory 9 separate from the content recording medium, similarly to the case of obtaining playback-permission information when obtaining the content recording medium, (2) playback-permission information is obtained online by the content playback apparatus 20, (3) playback-permission information is obtained online by the PC 17, or (4) playback-permission information is obtained using a cellular-phone terminal 18.

When (1) playback-permission information is written to the external memory 9, the user 11 records the playback-permission information in the playback-permission-information recording area of the content recording medium by the method (a) or (b) described above.

### Obtaining playback-permission information by the content playback apparatus

When (2) playback-permission information is obtained online by the content playback apparatus 20, first, the content playback apparatus 20 requests playback permission to a server 14 of the playback-permission-information issuer 13 via a general-purpose or special-purpose wide area network 16. At this time, the content playback apparatus 20, based on operations by the user 11, sends to the server 14 medium identification information identifying the content recording medium obtained by the user 11, content identification information identifying content that the user 11 purchases, and user information for authentication or charging by the server 14, together with the playback permission request.

In response, the server 14 executes authentication or charging based on the user information, medium identification information, and the content identification, and issues playback-permission information to the content playback apparatus 20 via the wide area network 16. At this time, the server 14 sends the medium identification information and the content identification information to the content playback apparatus 20 together with the playback-permission information.

Upon receiving playback-permission information, the content playback apparatus 20 records the playback-permission information in the playback-permission-information recording area of the content recording medium. In this manner, the user 11 can obtain playback-permission information for desired content.

### Obtaining playback-permission information by PC

When (3) playback-permission information is obtained online by the PC 17, the PC 17 requests playback permission to the server 14 via the wide area network 16. At this time, the PC 17, by input operations by the user 11 or by transfer from the content playback apparatus 20, sends the medium identification information, content identification information, and the user information to the server 14 together with the playback permission request.

In response, similarly to the case (2), the server 14 sends playback-permission information to the PC 17, the PC 17 transfers the playback-permission information to the content playback apparatus 20, and the content playback apparatus 20 records the playback-permission information in the playback-permission-information recording area of the content recording medium.

### Obtaining playback-permission information by cellular-phone terminal

When playback-permission information is obtained using the cellular-phone terminal 18, first, the cellular-phone terminal 18 requests playback permission to the server 14 via a cellular-phone communication network 19. At this time, the cellular-phone terminal 18, based on operations by the user 11, sends the medium identification information, the content identification information, and the user information to the server 14 together with the playback permission request.

These pieces of information can be written to an external memory by the content playback apparatus 20 or the PC 17 by attaching the external memory to the content playback apparatus 20 or the PC 17, and can be attached to the cellular-phone terminal 18 and sent from the cellular-phone terminal 18 to the server 14 by attaching the external memory to the cellular-phone terminal 18.

Furthermore, by connecting the content playback apparatus 20 or the PC 17 with the cellular-phone terminal 18 via a USB (Universal Serial Bus) cable or the like, these pieces of information can be transferred from the content playback apparatus 20 or the PC 17 and sent from the cellular-phone terminal 18 to the server 14.

Upon receiving the playback permission request from the cellular-phone terminal 18, the server 14 sends playback-permission information to the cellular-phone terminal 18, similarly to the cases of (2) and (3).

The playback-permission information is received by the cellular-phone terminal 18 and transferred to the content playback apparatus 20 either directly from the cellular-phone terminal 18 or via the PC 17.

When transferring the playback-permission information directly from the cellular-phone terminal 18 to the content playback apparatus 20, for example, (c) the cellular-phone terminal 18 is linked to the content playback apparatus 20 by an infrared sending function of the cellular-phone terminal 18 and an infrared receiving function of the content playback apparatus 20 or via a USB cable or the like, and playback-permission information is sent from the cellular-phone terminal 18 to the content playback apparatus 20, or (d) the external memory 9 is attached to the cellular-phone terminal 18, playback-permission information received by the cellular-phone terminal 18 is written to the external memory 9, the external memory 9 is attached to the content playback apparatus 20, and the playback-permission information is read from the external memory 9 by the content playback apparatus 20. Similarly, when transferring playback-permission information from the cellular-phone terminal 18 to the content playback apparatus 20 via the PC 17, the playback-permission information can be transferred from the cellular-phone terminal 18 to the PC 17, for example, by wireless communication such as infrared communication or by attaching and detaching an external memory.

The content playback apparatus 20 records the playback-permission information, transferred from the cellular-phone terminal 18 either directly or via the PC 17 as described above, in the playback-permission-information recording area of the content recording medium.

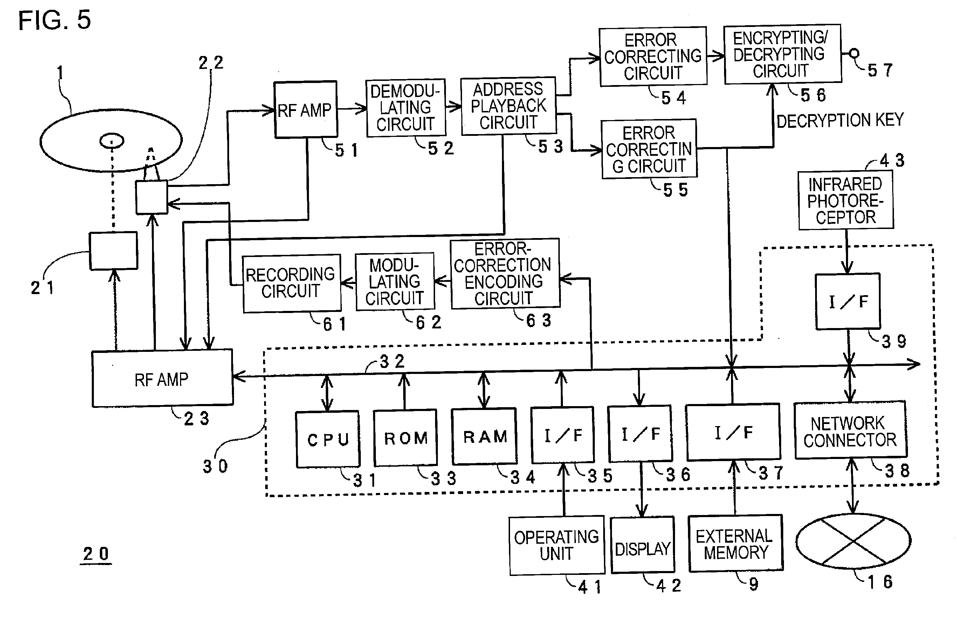

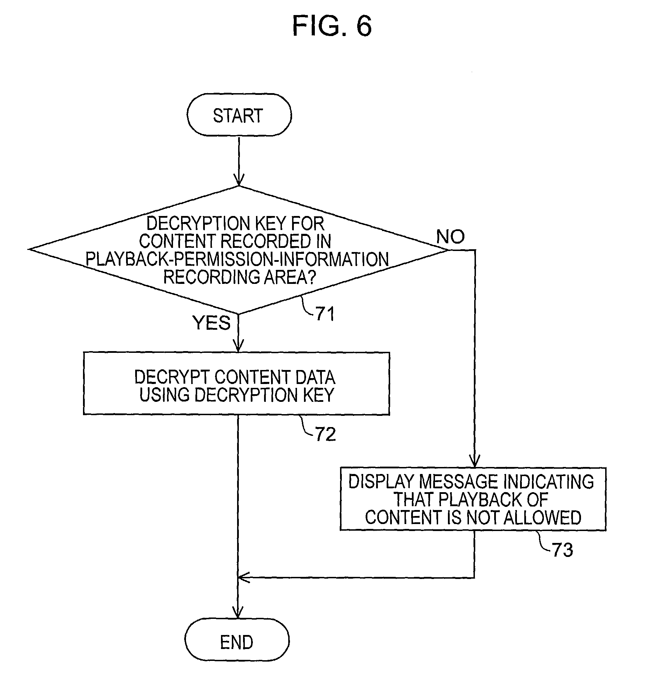

### 3. Embodiment of Content Playback Apparatus and Content Playback Method (Figs. 5 and 6)

Fig. 5 shows a content playback apparatus according to an embodiment of the present invention. In this embodiment, the optical disk 1 shown in Fig. 1 is used as a content recording medium, and the content playback apparatus 20 is an optical disk playback apparatus (player).

In the content recording area 1c of the optical disk 1, content data of a large number of pieces of content, such as video and music, is recorded in an encrypted form. Thus, each of the pieces of content can be played back by obtaining a decryption key as playback-permission information in the manner described above with reference to Fig. 4 and recording the decryption key in the playback-permission-information recording area 1e of the optical disk 1.

The optical disk 1 is driven to rotate by a spindle motor 21, signals (data and information) is read by an optical pickup (optical head) 22 from the lead-in area 1a, the content recording area 1c, the lead-out area 1b, and the playback-permission-information recording area 1e shown in Fig. 1, and the decryption key is recorded in the playback-permission-information recording area 1e.

The signals read by the optical pickup 22 are fed to an RF amp 51, and the RF amp 51 yields a tracking error signal and a focus error signal. The tracking error signal and a focus error signal are fed to a servo controller 23, and tracking and focus of the optical pickup 22 is controlled accordingly.

Furthermore, signals output from the RF amp 51 are demodulated by a demodulating circuit 52, and the demodulated signals are fed to an address playback circuit 53. The address playback circuit 53 detects a read address of the optical disk 1. The address information is fed to the servo controller 23 and is used for addressing of the optical disk 1.

Encrypted content data read from the content recording area 1c of the optical disk 1 via the address playback circuit 53 is fed to an error correcting circuit 54, and the error correcting circuit 54 yields error-corrected encrypted content data. The decryption key read from the playback-permission-information recording area 1e of the optical disk 1 via the address playback circuit 53 is fed to an error correcting circuit 55, and the error correcting circuit 55 yields an error-corrected decryption key.

Then, a decrypting circuit 56 decrypts the encrypted content data output from the error correcting circuit 54 using the decryption key output from the error correcting circuit 55, and the decrypted content data is output to an output terminal 57.

A system controller 30 controls components of the content playback apparatus 20. The system controller 30 includes a CPU 31, and a ROM 33 storing programs executed by the CPU 31 and various data and a RAM 34 in which programs and data are loaded are connected to a bus 32 thereof.

Furthermore, an operating unit 41 is connected to the bus 32 via an interface 35, and a display 42 is connected to the bus 32 via an interface 36.

In this embodiment, the external memory 9 on which the playback-permission information (decryption key) described with reference to Fig. 4 is written can be attached to the content playback apparatus 20, and the external memory 9 is connected to the bus 32 via an interface 37.

Furthermore, in this embodiment, a network connector 38 for connecting to the wide area network 16 is connected to the bus 32 so that the playback-permission information (decryption key) can be obtained online by the content playback apparatus 20.

Furthermore, in this embodiment, an infrared photoreceptor 43 is connected to the bus 32 via an interface 39 so that the playback-permission information (decryption key) described with reference to Fig. 4, sent from the cellular-phone terminal 18 by infrared rays can be received.

The decryption key, read from the external memory 9, received by the network connector 38 from the server 14 of the playback-permission-information issuer 13 via the wide area network 16, or received by the infrared photoreceptor 43 from the cellular-phone terminal 18, is processed by the CPU 31. Then, the decryption key, together with the medium identification and content identification information, is encoded for error correction by an error-correction encoding circuit 63 and modulated by a modulating circuit 62.

Furthermore, in a recording circuit 61, recording laser beams emitted from the optical pickup 22 to the optical disk 1 is controlled according to the modulated data, and the decryption key is recorded in the playback-permission-information recording area 1e of the optical disk 1 at an address determined by the CPU 31.

Fig. 6 shows an example of a content-playback controlling process executed by the CPU 31 of the content playback apparatus 20.

In this embodiment, when the user instructs playback of a piece of content (e.g., a piece of music) using the operating unit 41, first, in step 71, the CPU 31 determines whether a decryption key for the piece of content is recorded in the playback-permission-information recording area 1e of the optical disk 1.

When the decryption key for the piece of content is recorded in the playback-permission-information recording area 1e of the optical disk 1, the CPU proceeds from step 71 to step 72, in which the decrypting circuit 56 decrypts the content data using the decryption key. Thus, the user is allowed to enjoy the content.

On the other hand, when the decryption key for the piece of content is not recorded in the playback-permission-information recording area 1e of the optical disk 1, the CPU proceeds from step 71 to step 73, in which a message indicating that the playback of the content is not allowed is displayed.

The message indicating that the playback of the content is not allowed may be presented in the form of audible message instead of visual message such as image or text.

### 4. Other Embodiments

In the embodiments described above, the playback of content is restricted by recording content data in an encrypted form. Alternatively, content data may be recorded without encrypting it. In this case, a content playback apparatus checks whether predetermined code information or flag information is recorded as playback-permission information of the content in the playback-permission-information recording area of the content recording medium, and does not playback the content when such information is not recorded.

The disk medium of the content recording medium is not limited to the optical disks in the embodiments shown in Figs. 1 to 3, and may be, for example, a magnetic disk. The chip-shaped memory attached to a disk medium such as an optical disk to serve as a playback-permission-information recording area is not limited to the semiconductor chip in the embodiment shown in Fig. 3, and may be, for example, a chip-shaped magnetic recording medium.

It should be understood by those skilled in the art that various modifications, combinations, sub-combinations and alterations may occur depending on design requirements and other factors insofar as they are within the scope of the appended claims or the equivalents thereof.

## Claims

1. A content recording medium comprising:
a content recording area where content data is recorded in such a manner that playback of the content data is restricted; and
a playback-permission-information recording area where playback-permission information that allows canceling the playback restriction of the content data to permit playback is to be recorded, the playback-permission-information recording area being provided separately from the content recording area.

2. The content recording medium according to Claim 1,
wherein the content recording medium is a disk medium, and
wherein each of the content recording area and the playback-permission-information recording area is a partial area with respect to a radial direction of the disk medium.

3. The content recording medium according to Claim 1,
wherein the content recording medium is a card-shaped memory, and
wherein each of the content recording area and the playback-permission-information recording area is a partial area of the card-shaped memory.

4. The content recording medium according to Claim 1,
wherein the content recording medium is a disk medium,
wherein the content recording area is a partial area with respect to a radial direction of the disk medium, and
wherein the playback-permission-information recording area is a chip-shaped memory attached to an inner side or an outer side of the content recording area of the disk medium.

5. The content recording medium according to any one of the preceding claims,
wherein the playback of the content data is restricted by encrypting the content data, and the playback-permission information is a key that allows decrypting the encrypted content data.

6. The content recording medium according to any one of the preceding claims,
wherein a plurality of pieces of content data is recorded in the content recording area, and
wherein the playback-permission information is provided on a basis of each piece or each group of content data.

7. A method of obtaining playback-permission information that allows canceling playback restriction of content data to permit playback at a content-playback side, the method being executed for a content recording medium including a content recording area where content data is recorded in such a manner that playback of the content data is restricted, and including a playback-permission-information recording area where the playback-permission information is to be recorded, the playback-permission-information recording area being provided separately from the content recording area, the method comprising the steps of:
requesting, at the content-playback side, a server of a playback-permission-information issuer to issue the playback-permission information;
issuing the playback-permission information to the content-playback side by the server in response to the request; and
receiving the playback-permission information and recording the playback-permission information in the playback-permission-information recording area at the content-playback side.

8. The method of obtaining playback-permission information according to Claim 7,
wherein the requesting step and the issuing step are executed via a network.

9. The method of obtaining playback-permission information according to either Claim 7 or Claim 8,
wherein the requesting step is executed by a cellular-phone terminal at the content-playback side to the server,
wherein the issuing step is executed by the server to the cellular-phone terminal, and
wherein the receiving and recording step records playback-permission information transferred from the cellular-phone terminal in the playback-permission-information recording area.

10. The method of obtaining playback-permission information according to any one of Claims 7 to 9,
wherein the playback of the content data is restricted by encrypting the content data, and the playback-permission information is a key that allows decrypting the encrypted content data.

11. The method of obtaining playback-permission information according to any one of Claims 7 to 10,
wherein a plurality of pieces of content data is recorded in the content recording area, and
wherein the playback-permission information is provided on a basis of each piece or each group of content data.

12. The method of obtaining playback-permission information according to any one of Claims 7 to 11,
wherein the requesting step requests playback-permission information with medium identification information identifying the content recording medium relevant to the request and content identification information identifying content relevant to the request, and the issuing step issues the playback-permission information with the medium identification information and the content identification information.

13. A method of playing back content data from a content recording medium including a content recording area where content data is recorded in such a manner that playback of the content data is restricted, and including a playback-permission-information recording area where playback-permission information that allows canceling the playback restriction of the content data to permit playback is to be recorded, the playback-permission-information recording area being provided separately from the content recording area, the method comprising the steps of:
determining whether playback-permission information for content data that is to be played back according to an instruction is recorded in the playback-permission-information recording area;
playing back the content data when it is determined in the determining step that playback-permission information for the content data is recorded in the playback-permission-information recording area; and
presenting a message that the playback of the content data is not allowed when it is determined in the determining step that playback-permission information for the content data is not recorded in the playback-permission-information recording area.

14. A computer program code means that, when executed on a computer system instructs a system to carry out the steps according to any one of Claims 7 to 13.

15. A computer readable storage medium having recorded thereon program code means that, when executed on a computer system instructs a system to carry out the steps according to any one of Claims 7 to 13.

16. A content playback apparatus for playing back content data from a content recording medium including a content recording area where content data is recorded in such a manner that playback of the content data is restricted, and including a playback-permission-information recording area where playback-permission information that allows canceling the playback restriction of the content data to permit playback is to be recorded, the playback-permission-information recording area being provided separately from the content recording area, the content playback apparatus comprising:
determining means for determining whether playback-permission information for content data that is to be played back according to an instruction is recorded in the playback-permission-information recording area;
playback means for playing back the content data when it is determined by the determining means that playback-permission information for the content data is recorded in the playback-permission-information recording area; and
presenting means for presenting a message that the playback of the content data is not allowed when it is determined by the determining means that playback-permission information for the content data is not recorded in the playback-permission-information recording area.

17. The content playback apparatus according to Claim 16, further comprising:
communication means for receiving playback-permission information from a server that issues playback-permission information through communication with the server via a network; and
recording means for recording the playback-permission information in the playback-permission-information recording area.

18. The content playback apparatus according to either Claim 16 or Claim 17, further comprising:
receiving means for receiving playback-permission information sent from a cellular-phone terminal; and
recording means for recording the playback-permission information in the playback-permission-information recording area.

19. The content playback apparatus according to any one of Claims 16 to 18, further comprising:
reading means for reading playback-permission information from an external memory attached to the content playback apparatus; and
recording means for recording the playback-permission information in the playback-permission-information recording area.

20. A content playback apparatus for playing back content data from a content recording medium including a content recording area where content data is recorded in such a manner that playback of the content data is restricted, and including a playback-permission-information recording area where playback-permission information that allows canceling the playback restriction of the content data to permit playback is to be recorded, the playback-permission-information recording area being provided separately from the content recording area, the content playback apparatus comprising:
a determining unit determining whether playback-permission information for content data that is to be played back according to an instruction is recorded in the playback-permission-information recording area;
a playback unit playing back the content data when it is determined by the determining unit that playback-permission information for the content data is recorded in the playback-permission-information recording area; and
a presenting unit presenting a message that the playback of the content data is not allowed when it is determined by the determining unit that playback-permission information for the content data is not recorded in the playback-permission-information recording area.
